# EUROPEAN PATENT APPLICATION

(11) **EP 4 607 357 A1**
(43) Date of publication of application: **27.08.2025**
(21) Application number: 24208934.0
(22) Date of filing: 25.10.2024
(51) Int. Cl.: G06F 11/263, G06F 11/27, G01R 31/317

(54) **INSTANCES FOR BUILT-IN SELF TESTING**

(30) Priority: 21.02.2024 US 202418583422
(71) Applicant: Google LLC, Mountain View, CA 94043 (US)
(72) Inventor: BHATIA, Sandeep, Mountain View, 94043 (US); CIPLICKAS, Dennis, Mountain View, 94043 (US); NILAMBOOR, Sanjay, Mountain View, 94043 (US)
(74) Representative: Betten & Resch

(57) **Abstract**

Aspects of the disclosure are directed to built-in self-testing instances for detecting defects in a compute unit of a computer chip. Each instance can correspond to a calculation portion of the compute unit, such as data column of a matrix multiplication unit. The instances can include data generators for generating random bits, data shapers for customizing the random bits, and data compactors for generating signatures to determine if the compute unit is outputting the correct results. The instances can account for potentially massive data bandwidth of the compute unit since each instance can perform independent testing for respective calculation portions of the compute unit.

## Description

### BACKGROUND

Computer chips, such as system-on-chips, multi-chip modules, or accelerators, can contain subtle defects that are not easily detectable during testing. As examples, subtle defects can include voids, cracking, resistive metal shorts, or transistor voltage shifts. The subtle defects can cause data computation errors which may generate bad results, such as inaccurate computation results or incorrect operation execution, that are not immediately caught while the computer chip is in use. Since the subtle defects are difficult to catch, they can lead to larger issues in product usability, especially for training pods or hyper-scalers that contain thousands of computer chips.

### BRIEF SUMMARY

Aspects of the disclosure are directed to built-in self-testing instances for detecting defects in a compute unit of a computer chip. Each instance can correspond to a partial calculation of the compute unit, such as a data column of a matrix multiplication unit. The instances can include data generators for generating random bits, data shapers for customizing the random bits, and data compactors for generating signatures to determine if the compute unit is outputting the correct results. The instances can account for potentially massive data bandwidth of the compute unit since each instance can perform independent testing for respective calculation portions of the compute unit.

An aspect of the disclosure provides for a method for detecting defects in a computer chip based on accuracy of a computing unit, the method including: generating, by one or more processors, a plurality of random strings of bits, each random string of bits corresponding to a data column of the computing unit; providing, by the one or more processors, the plurality of random strings of bits to the computing unit; receiving, by the one or more processors, one or more results from the computing unit based on the plurality of random strings of bits; compressing, by the one or more processors, the one or more results into one or more signatures; and comparing, by the one or more processors, the one or more signatures to one or more expected signatures to determine whether the computing unit is outputting accurate results.

In an example, the method further includes: determining, by the one or more processors, the computing unit is outputting inaccurate results; and stopping, by the one or more processors, operation of the computing unit. In another example, the method further includes synchronizing, by the one or more processors, the generation of the plurality of random strings of bits. In yet another example, generating each of the random strings of bits further includes loading an initial value and scrambling the initial value or loading a pseudorandom binary sequence.

In yet another example, the method further includes: converting, by the one or more processors, the plurality of random strings of bits to a plurality of data streams based on predetermined data profiles; and providing, by the one or more processors, the plurality of data streams to the computing unit. In yet another example, the predetermined data profiles comprise at least one of random input values, light or heavy input values, inputs with ascending or descending values, inputs with values representing hills or valleys, or inputs toggled with low or high values. In yet another example, the predetermined data profiles include customized profiles having a programmable data range and probability.

In yet another example, providing the plurality of random strings of bits to the computing unit further includes at least one of providing a specific value every cycle, providing a random value every cycle, holding a last value for one or more cycles, or operating according to a pulse mode. In yet another example, the one or more expected signatures represent one or more ground truth values. In yet another example, comparing the one or more signatures to one or more expected signatures further determines a health or minimum voltage of the computer chip.

Another aspect of the disclosure provides for a system including: one or more processors; and one or more storage devices coupled to the one or more processors and storing instructions that, when executed by the one or more processors, cause the one or more processors to perform operations for detecting defects in a computer chip based on accuracy of a computing unit, the operations including: generating a plurality of random strings of bits, each random string of bits corresponding to a data column of the computing unit; providing the plurality of random strings of bits to the computing unit; receiving one or more results from the computing unit based on the plurality of random strings of bits; compressing the one or more results into one or more signatures; and comparing the one or more signatures to one or more expected signatures to determine whether the computing unit is outputting accurate results.

In an example, the operations further include: determining the computing unit is outputting inaccurate results; and stopping operation of the computing unit. In another example, the operations further include synchronizing the generation of the plurality of random strings of bits. In yet another example, generating each of the random strings of bits further includes loading an initial value and scrambling the initial value or loading a pseudorandom binary sequence.

In yet another example, the operations further include: converting the plurality of random strings of bits to a plurality of data streams based on predetermined data profiles; and providing the plurality of data streams to the computing unit. In yet another example, the predetermined data profiles include at least one of random input values, light or heavy input values, inputs with ascending or descending values, inputs with values representing hills or valleys, or inputs toggled with low or high values. In yet another example, the predetermined data profiles include customized profiles having a programmable data range and probability.

In yet another example, providing the plurality of random strings of bits to the computing unit further includes at least one of providing a specific value every cycle, providing a random value every cycle, holding a last value for one or more cycles, or operating according to a pulse mode. In yet another example, the one or more expected signatures represent one or more ground truth values.

Yet another aspect of the disclosure provides for a non-transitory computer readable medium for storing instructions that, when executed by one or more processors, cause the one or more processors to perform operations for detecting defects in a computer chip based on accuracy of a computing unit, the operations including: generating a plurality of random strings of bits, each random string of bits corresponding to a data column of the computing unit; providing the plurality of random strings of bits to the computing unit; receiving one or more results from the computing unit based on the plurality of random strings of bits; compressing the one or more results into one or more signatures; and comparing the one or more signatures to one or more expected signatures to determine whether the computing unit is outputting accurate results.

### BRIEF DESCRIPTION OF THE DRAWINGS

FIG. 1 depicts a block diagram of an example computer chip implementing a built-in self-testing (BIST) controller according to aspects of the disclosure.
FIG. 2 depicts a block diagram of an example instance of a BIST controller according to aspects of the disclosure.
FIG. 3 depicts graphs of example data profiles according to aspects of the disclosure.
FIG. 4 depicts a block diagram of an example hardware implementation of an architecture for data processing according to aspects of the disclosure.
FIG. 5 depicts a block diagram of a data processing system implementing an example computation unit according to aspects of the disclosure.
FIG. 6 depicts a block diagram of an example environment for implementing a data processing system including a computation unit according to aspects of the disclosure.
FIG. 7 depicts a flow diagram of an example process for detecting defects in a computer chip according to aspects of the disclosure.

### DETAILED DESCRIPTION

The technology relates generally to built-in self-testing for detecting defects in one or more compute units, e.g., matrix multiplication units (MXUs) or vector processing units (VPUs), of a computer chip through a built-in self-testing (BIST) controller. The BIST controller is connected between the compute units under test and the remainder of the units of the computer chip to manage input, output, and control of the compute units under test. For example, the BIST controller can be coupled between a VPU and one or more MXUs of a tensor processing unit (TPU).

The BIST controller can include a multiplexer shim between a target compute unit corresponding to the compute unit under test and the remainder of the units for switching between a testing mode and a functional mode. Testing mode may refer to the multiplexer shim connecting the BIST controller so that the target compute unit can receive testing data while functional mode may refer to the multiplexer shim disconnecting the BIST controller so that the target compute unit can receive normal processing data, e.g., data for performing matrix multiplications.

The BIST controller can be programmed via micro-code, e.g., control status registers (CSRs) or joint test action group (JTAG) interfaces, to generate and provide inputs for the target compute unit and check outputs of the target compute unit against expected values to determine whether the target compute unit is generating incorrect results. The incorrect results may be indicative of silent data corruption (SDC), which may result from subtle defects that can be difficult to catch while the computer chip is functioning. Example subtle defects may include voids, cracking, resistive metal shorts, and/or transistor voltage shifts. The BIST controller allows for mimicking software functionality to simulate SDC with at-speed and cycle-accurate operations to detect potential defects more easily and quickly in the computer chip. The BIST controller can further allow for determining the accuracy of the target compute unit to measure a health or minimum voltage requirement of the computer chip.

Compute unit data bandwidth, such as for one or more MXUs, can be massive, making alternative BIST units not feasible for compute unit error detection. For example, an MXU operation can include 8x16 physical tiles operating at a frequency of at least 1.0 GHz. To account for the massive data bandwidth, the BIST controller can include a plurality of instances per target compute unit, e.g., 32 instances per MXU, that operate as a single logical unit, allowing for reusing the same BIST controller but being able to account for the higher bandwidth. Each instance can perform independent testing for one or more data columns of the target compute unit, including test data generation and/or test control generation, even when running the same test. For example, each instance can drive 8 data columns of the MXU, with 6 data streams per column. The instances can be synchronized to allow for repeatability and accuracy of target compute unit results. Utilizing instances allows for scaling the bandwidth by the number of instances, e.g., 32 instances in a BIST controller allows for scaling the bandwidth by 32 times. For example, data streaming input can operate at about 5.6 TB/s. For a BIST controller with 32 instances, this results in data processing of about 175 GB/s per BIST instance. As another example, data streaming output, e.g., integer and float results, can operate at about 9 TB/s. For a BIST controller with 32 instances, this results in data processing of about 281 GB/s per BIST instance. The BIST controller can be programmed to process all results every cycle, even if a result is functionally invalid in a cycle. The instances of the BIST controller also allow for measuring a health or minimum voltage of the MXU by controlling the number of active instances to stay within current and/or thermal bounds of the MXU.

An instance of the BIST controller includes one or more data generators, data shapers, control generators, and data compactors. The data generators can be linear feedback shift registers (LFSRs) or any other data generator, e.g., cellular automata, configured to generate random strings of bits. Each data generator can start with a different initial value and can be programmed with instructions, such as scramble to change the initial value, scramble differently per data generator, load a new initial value, and/or load a configurable pseudorandom binary sequence. Each data generator can also be programmed with instructions to pause the generation of random strings of bits, resume the generation of random strings of bits, and/or reset the initial value to a different initial value. Each data generator can pause and resume to synchronize instances per target compute unit.

The data shapers can be configured to generate various types of data streams or control streams from the random strings of bits according to predetermined data profiles. Example data profiles can include random input values or specific distributions of input values, such as light/heavy inputs, inputs with ascending/descending values, inputs with values representing hills/valleys, and/or inputs toggled with low/high values. The data profiles can also include customized profiles with a plurality of data buckets, each having a programmable data range and programmable probability.

The control generators can be configured to select how to transmit the various types of data streams or control streams as input to the target compute unit. For example, the control generators can be programmed to provide a specific value every cycle, provide a random value every cycle, hold the last value for one or more cycles, and/or operate according to a pulse mode, such as a return-to-zero mode.

The data compactors can be multiple input signature registers (MISRs) or any other data compactor configured to compress results from the target compute unit into one or more signatures, e.g., particular strings of bits, for comparison. For example, there can be 3 data compactors per data column, where one data compactor is for the float output and the other two data compactors are for the integer output. Each data compactors can be programmed with instructions, such as copy to save a current signature, load a pre-computed expected signature, and/or match a signature with the expected signature. Each data compactor can also be configured to pause the matching of signatures, resume the matching of signatures, and/or reset the pre-computed expected signatures. Each data compactor can pause and resume to synchronize instances per target compute unit. The data compactors can be configured to compare output from the target compute unit generated in response to the data streams to ground-truth values, such as using a checksum to determine whether the output and ground-truth values are a match. The data compactors can compare individual signatures or a combined signature to the ground-truth values to determine the accuracy of the target compute unit, e.g., whether the target compute unit is generating incorrect results indicative of SDC.

The BIST controller can be programmed with loop instructions configured to repeatedly test the target compute unit for a longer period, e.g., trillions of cycles, with less micro-code, e.g., a few lines of micro-code. The loop instructions also allow for running multiple iterations of the same test to catch defects that fail differently on the same excitation.

The BIST controller can further include a synchronizer to synchronize instances for a target compute unit. For example, all instances of a target compute unit can synchronize at the start of a test. The instances can pause and send out a signal they are ready to synchronize. The signals from all instances can be logically combined at the synchronizer and broadcast back to the instances so that they can resume all at once. Synchronization can occur as needed or at specified time intervals.

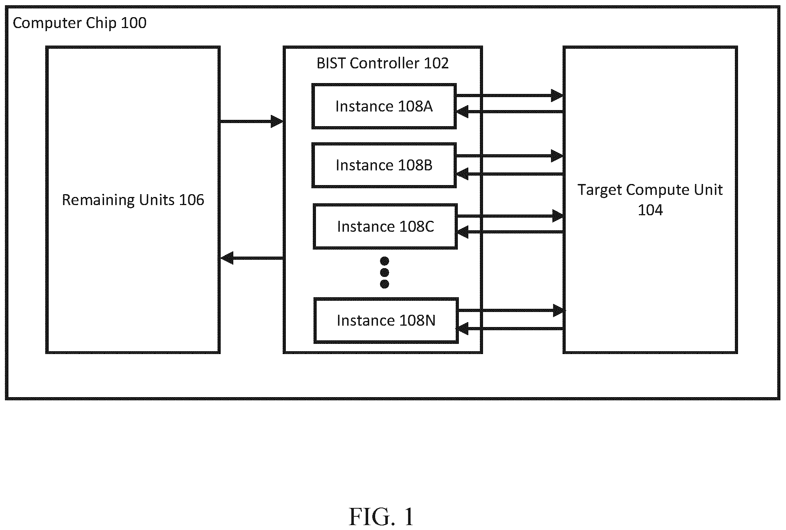

FIG. 1 depicts a block diagram of an example computer chip 100 implementing a BIST controller 102. The BIST controller 102 can be configured to detect defects in a target compute unit 104 under testing by managing input, output, and/or control of the target compute unit 104. The BIST controller 102 can be positioned between the target compute unit 104 and the remaining units 106 of the computer chip 100. The computer chip 100 can be an integrated circuit, such as a system-on-chip, multi-chip module, or hardware accelerator, as examples. The target compute unit 104 can be a matrix multiplication unit (MXU) or a vector processing unit (VPU), as examples.

For example, the BIST controller 102 can be connected between a VPU and a MXU of a tensor processing unit (TPU) for testing the MXU. The MXU can be any microarchitecture equipped to handle atomic matrix multiplication of a multiplicand matrix of any size, such as a systolic array. The VPU can also be any microarchitecture having a lane dimension and a sublane dimension and containing any number of vector registers to provide any number of elements to the MXU.

The computer chip 100 can switch between a testing mode and a normal data processing mode by respectively connecting and disconnecting the BIST controller 102. Testing mode can involve sending testing data to the target compute unit while normal data processing mode can involve sending typical processing data to the target compute unit. The BIST controller 102 can include a multiplexer shim (not shown) for switching between the testing mode and normal data processing mode. The multiplexer shim can receive a signal from one of the remaining units 106 to connect the BIST controller 102 for testing the target compute unit 104. The multiplexer shim can also receive another signal from one of the remaining units 106 to disconnect the BIST controller 102 so the target compute unit 104 can perform normal operations.

When the computer chip 100 is operating in the testing mode and the BIST controller 102 is connected to the target compute unit 104, the BIST controller 102 can generate and provide inputs for the target compute unit 104. The BIST controller 102 can further compare outputs calculated by the target compute unit 104 to expected values of the outputs to determine whether the target compute unit 104 is outputting correct or incorrect calculations. The correct or incorrect calculations can indicate whether the target compute unit 104 is operating correctly or not. For example, incorrect calculations may be indicative of silent data corruption (SDC) resulting from subtle defects in the target compute unit 104 or computer chip 100 overall that are difficult to find while the computer chip 100 is in operation. The subtle defects can include voids, cracking, resistive metal shorts, and/or transistor voltage shifts, as examples. The correct or incorrect calculations can also indicate a minimum voltage requirement or overall health of computer chip 100 if the calculations are not staying within current and/or thermal bounds.

The BIST controller 102 allows for simulating calculations with the computer chip more easily and quickly with at-speed and cycle-accurate operations through the use of instances 108, e.g., 108A-N. While four instances 108 are depicted in FIG. 1, the BIST controller 102 can include any number of BIST instances 108. The number of instances 108 in the BIST controller 102 can correspond to the number of partial calculations performed by the target compute unit 104. For example, the number of instances 108 can correspond to the number of data columns in a MXU, with each instance in communication with a respective data column of the MXU. The instances 108 of the BIST controller 102 can be programmed with micro-code, such as control status registers (CSRs) or joint test action group (JTAG) interfaces, to operate as a single logical unit. The BIST controller 102 can be programmed to process all results every cycle, even if a result is functionally invalid in a cycle, through the use of the instances 108.

By operating as a single logical unit, the instances 108 allow for performing independent testing of the partial calculations, e.g., respective data columns of a MXU, even when instances 108 are running the same test. The independent testing can include test data generation, test control generation, minimum voltage testing, and/or health testing. The instances 108 further allow for reusing the same BIST controller 102 while scaling for higher bandwidth that can be required to operate the target compute unit 104. The instances 108 can also be synchronized to allow for repeat testing while maintaining accuracy of the target compute unit 104 when detecting for potentially incorrect results.

The BIST controller 102 can further include a synchronizer to synchronize the instances 108. For example, the synchronizer can allow for all instances 108 for a target compute unit to synchronize at the start of a test. The instances 108 being synchronized can send out a signal they are ready to synchronize. The signals from these instances can be logically combined at the synchronizer and broadcast back to the instances 108 so that they can resume all at once. Synchronization can occur as needed or at specified time intervals to further improve the testing capabilities of the BIST controller 102.

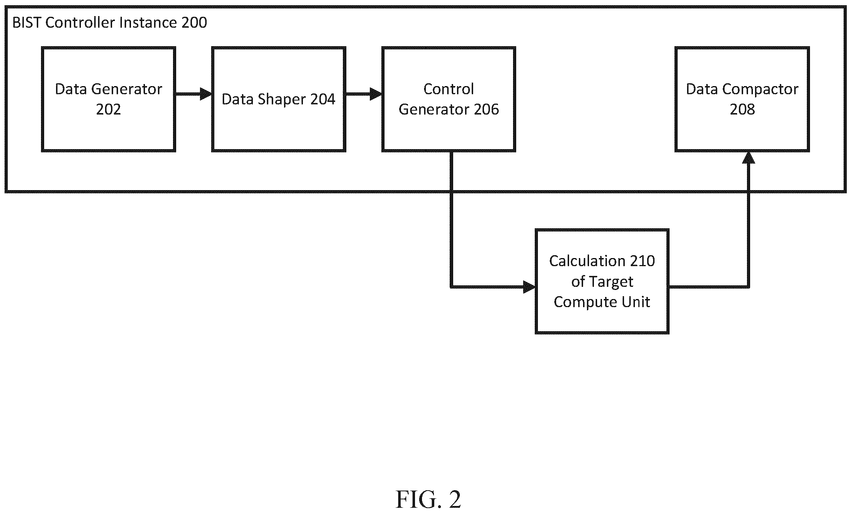

FIG. 2 depicts a block diagram of an example instance 200 of a BIST controller. The instance 200 can correspond to any of the instances 108 as depicted in FIG. 1. The instance 200 can include a data generator 202, a data shaper 204, a control generator 206, and a data compactor 208. The data generator 202, data shaper 204, control generator 206, and data compactor 208 can be implemented as one or more computer programs instructed with micro-code.

The data generator 202 can be configured to generate a random string of bits. Example data generators 202 can include linear feedback shift registers (LFSRs) and/or cellular automata (CA). The data generator 202 can load an initial value and can scramble the initial value to generate a randomized value corresponding to the random string of bits. The initial value can be a pseudorandom binary sequence. The data generator 202 can further load new initial values, pause loading of initial values, resume loading of initial values, and/or reset the initial value to a different initial value.

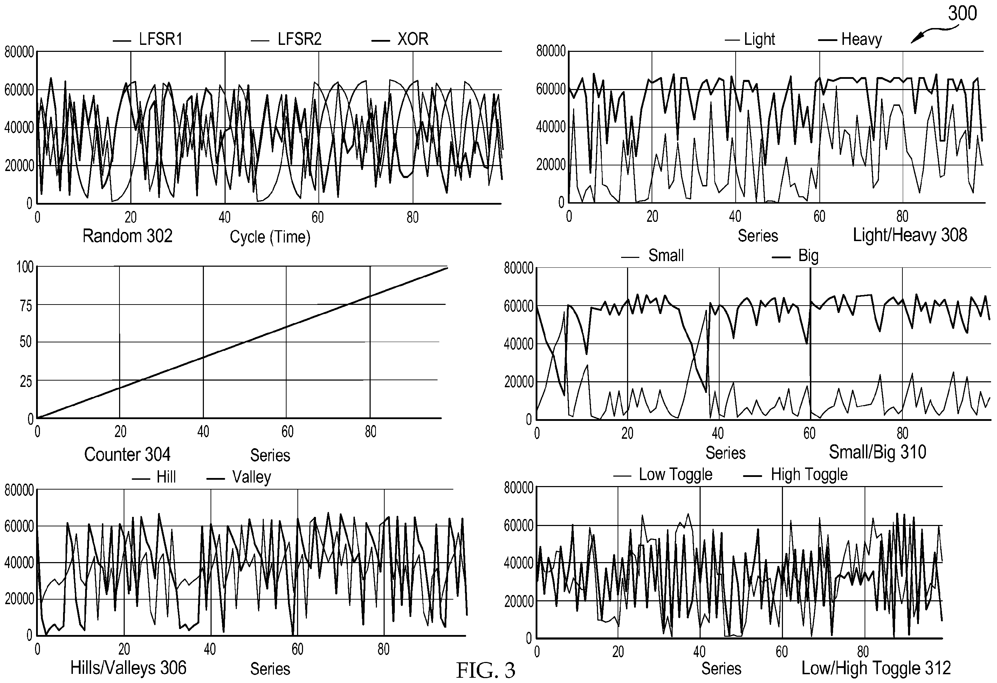

The data shaper 204 can be configured to transform the random string of bits into one or more types of data stream or control streams according to a predetermined data profile. The data profile can be programmed as part of the micro-code. FIG. 3 depicts graphs of example data profiles 300. The example data profiles can include random input values 302 or specific distributions of input values, such as inputs with ascending or descending values 304, inputs with values representing hills or valleys 306, input with light or heavy values 308, inputs with small or large values 310, and/or inputs toggled with low or high values 312. Light/heavy inputs 308 may respectively refer to inputs biased with fewer "1" bits and inputs biased with more "1" bits. Hill/valley inputs 306 may respectively refer to inputs biased to be within a threshold mid-range and inputs biased to be outside thresholds, e.g., extreme smaller or larger values. The data profiles can also include customized profiles with a plurality of data buckets, each having a programmable data range and programmable probability implemented in the micro-code.

Referring back to FIG. 2, the control generator 206 can be configured to determine how to transmit the data streams or control streams, or the random strings of bits if the data shaper 204 was bypassed, as input to the target compute unit according to instructions provided by the micro-code. The control generator 206 can provide a particular value or a random value to the target compute unit each cycle. The control generator 206 can also hold a value for one or more cycles. The control generator 206 can further operate according to a pulse mode, such as a return-to-zero mode. The control generator 206 can further include loop instructions for repeatedly testing the target compute unit over longer periods of time while being programmed with less micro-code. The loop instructions can indicate to the control generator 206 to run multiple iterations of the same value for catching defects that can fail differently on the same excitation.

The instance 200 transmits the data stream, control stream, and/or random string of bits to the target compute unit for performing a calculation 210 corresponding to the instance 200. For example, a data column of a MXU receives the data stream, control stream, and/or random string of bits for performing matrix multiplications. Based on the calculation, the target compute unit generates a result which is sent back to the instance 200.

The data compactor 208 can be configured to compress the result from the target compute unit into one or more signatures for comparison to a ground-truth value. An example data compactor 208 can be a multiple input signature register (MISR). The signatures can be particular strings of bits. The data compactor 208 can be configured to manage multiple results or the instance 200 can include multiple data compactors 208 for each result. For example, for a MXU result, the data compactor 208 can manage a float output and one or more integer outputs, or the instance 200 can include three data compactors 208 for the float output and integer output.

The data compactor 208 can generate a signature based on the result from the target compute unit, load a predetermined expected signature, and match the generated signature with the expected signature. The data compactor 208 can further pause matching of signatures, resume matching of signatures, and/or reset the predetermined expected signature to different values. The data compactor 208 can compare the signature representative of the output from the target compute unit to a signature representative of a ground-truth value. For example, the data compactor 208 can include a checksum to determine whether the signatures match. The data compactor 208 can compare individual signatures or a combined signature to determine whether the target compute unit is outputting correct results. For example, incorrect results may be indicative of SDC.

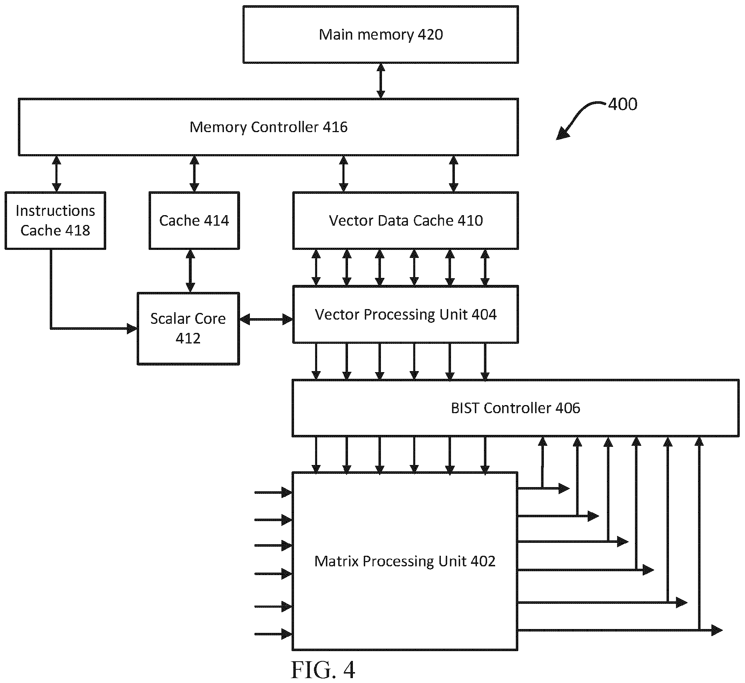

FIG. 4 depicts a block diagram of an example hardware implementation of an architecture 400 for data processing. The architecture 400 can be implemented as part of a computer chip, such as the computer chip 100 as depicted in FIG. 1.

The architecture 400 includes a matrix processing unit 402, with injection of input values from its left and top. The matrix processing unit 402 can correspond to the target compute unit 104 as depicted in FIG. 1. The matrix processing unit 402 can receive input from a vector processing unit 404 in a data processing mode or from a BIST controller 406 in a testing mode. The vector processing unit 404 and BIST controller 406 can respectively correspond to one of the remaining units 106 and the BIST controller 102 as depicted in FIG. 1. For example, data from the vector processing unit 404 or BIST controller 406 can be input to a top and left hand side of the matrix processing unit 402. As another example, data from the vector processing unit 404 or BIST controller 406 can be input to a top side of the matrix processing unit 402 and data from a second vector processing unit or BIST controller (not shown) can be input to a left side of the matrix processing unit 402.

The matrix processing unit 402 can send outputs back to the vector processing unit 404 or BIST controller 406 and/or to another vector processing unit or BIST controller (not shown). For example, resulting data from the matrix processing unit 402 can be output from a right hand side of the matrix processing unit 402 back to the vector processing unit 404 or BIST controller 406 to obtain full cycle connectivity. For instance, the vector processing unit 404 can use previous computations to process data in subsequent computations.

The vector processing unit 404 can communicate with a vector data cache 410 and a scalar core 412. The vector data cache 410 can be a cache or other type of memory or storage unit that holds vector data accessed by the vector processing unit 404. The scalar core 412 can communicate with a cache 414. The cache 414 can be a level 1 cache while the vector data cache 410 can be a level 2 cache from which level 1 data cache misses are served. The vector data cache 410 and the cache 414 can communicate with a memory controller 416. The scalar core 412 can supply inputs to the vector processing unit 404. Alternatively, or additionally, the scalar core 412 can supply inputs to the matrix processing unit 402. The scalar core 412 can receive instructions from an instructions cache 418, which can also communicate with the memory controller 416. The memory controller 416 can communicate with a main memory 420 of a computing system. The main memory 420 and/or memory controller 416 can enforce coherence among the caches 410, 414, 418.

The scalar core 412 and vector processing unit 404 may be part of a base core, built according to an instruction set architecture (ISA). The scalar core 412 can execute branches and generate addresses. The vector processing unit 404 can move data between a memory system and each cell of the matrix processing unit 402. The memory system may include, for example, one or more of the main memory 420, memory controller 416, and/or vector data cache 410, cache 414, and/or instructions cache 418. The base core can include a vector coprocessor expansion port for connection to the matrix processing unit 402. From the perspective of the vector processing unit 404, each cell of the matrix processing unit 402 may appear as a coprocessor or extension vector arithmetic logic unit (ALU), to which two source vectors are sent and one result vector per cycle is received in return.

As an example, the matrix processing unit 402 can be a systolic array of cells. Based on such architecture, the matrix processing unit 402 can perform operations such as sorting operations and/or semiring operations, e.g., compare, max-reduce, etc. As an example, the vector processing unit 404 can be a processor or computation unit that can operate on an entire vector in one instruction. The vector processing unit 404 can include a reduced instruction set computer (RISC)-V ISA or any other type of architecture. The vector processing unit 404 can include vectors of data, indices, block addresses, and/or other information. As an example, the scalar core 412 can be a processor that performs computations on one number or set of data at a time. The scalar core 412 may include, for example, RISC-V ISA extensions. The scalar core 412 can execute branches and generate addresses.

A sequencer can control an order in which instructions are executed by the scalar core 412, the vector processing unit 404, and the matrix processing unit 402. As an example, scalar, vector, and matrix instructions can all occur in a single instruction stream.

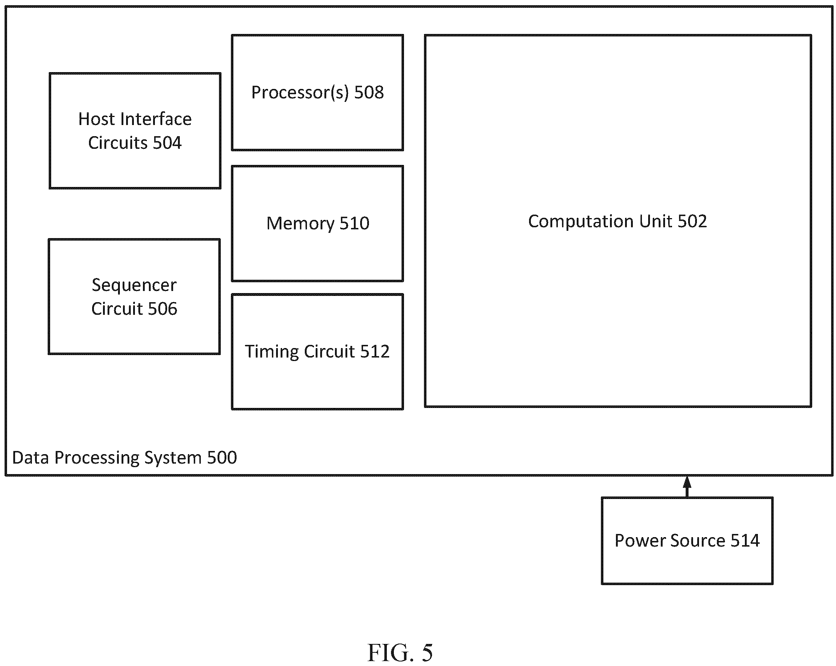

FIG. 5 depicts a block diagram of a data processing system 500 implementing an example computation unit 502. The computation unit 502 can be or include any of a variety of different computation units, for example the matrix multiplication unit as depicted in FIG. 4.

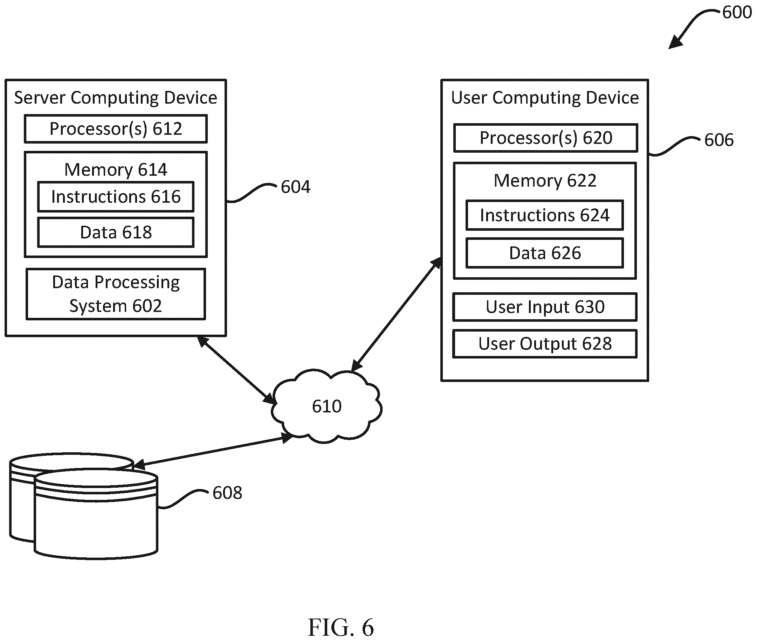

The data processing system 500 can include a host interface 504, a sequencer circuit 506, one or more processors 508, memory 510, and a timing circuit 512. The data processing system 500 can be implemented in one or more devices across one or more physical locations, as described further with respect to FIG. 6. In some examples, the components of the data processing system 500 can be implemented on one or more chips, which can interface with a host device according to any of a variety of data bus or other physical interconnect interfaces. In some examples, the data processing system 500 can be implemented on one or more devices on a network, e.g., on one or more servers of a cloud platform.

The processors 508 and memory 510 can be any of a variety of different types of processors and memory as described further with reference to FIG. 6. In some examples, the processors 508 can receive instructions that are executable by the computation unit 502 for processing data. For example, the instructions can be part of a computer program written for performing operations using the computation unit 502.

The sequencer circuit 506 can convert the received instructions into one or more signals understood by the computation unit 502 which causes the computation unit 502 to perform any of a variety of preconfigured operations. These operations can include loading data, e.g., from the memory 510, into a matrix multiplication unit of the computation unit 502, moving data into one or more processing elements of the matrix multiplication unit, processing the data by the one or more processing elements, and pushing the data out of the matrix multiplication unit. The sequencer circuit 506 can also be configured to generate one or more control signals for controlling when instructions are pushed to the computation unit 502.

The host interface 504 can be configured to receive data from outside the data processing system 500, e.g., from a processor or another device, and send data generated by the computation unit 502, e.g., the product of matrix multiplication, to outside the data processing system 500, e.g., to one or more devices or processors.

The timing circuit 512 can be configured to control timing of the computation unit 502, e.g., its clock frequency or clock rate. For example, operations performed by the computation unit 502 may be performed once per clock cycle, with such clock cycles managed by the timing circuit 512.

The data processing system 500 can also be connected to a power source 514. The power source 514 can be a battery or other form of power available on a host device implementing the data processing system 500 or can be a source external to the host device and connected to the host device and the data processing system 500 through some wireless or physical connection, e.g., through wires. The power source 514 can supply voltage to the computation unit 502, which can be managed, e.g., adjusted higher or lower, by the processors 508.

FIG. 6 depicts a block diagram of an example environment 600 for implementing a data processing system 602 including a computation unit. The data processing system 602 can correspond to the data processing system 500 as depicted in FIG. 5. The data processing system 602 can be implemented on one or more devices having one or more processors in one or more locations, such as in server computing device 604. User computing device 606 and the server computing device 604 can be communicatively coupled to one or more storage devices 608 over a network 610. The storage devices 608 can be a combination of volatile and non-volatile memory and can be at the same or different physical locations than the computing devices 604, 606. For example, the storage devices 608 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 604 can include one or more processors 612 and memory 614. The memory 614 can store information accessible by the processors 612, including instructions 616 that can be executed by the processors 612. The memory 614 can also include data 618 that can be retrieved, manipulated, or stored by the processors 612. The memory 614 can be a type of non-transitory computer readable medium capable of storing information accessible by the processors 612, such as volatile and non-volatile memory. The processors 612 can include one or more central processing units (CPUs), graphic processing units (GPUs), field-programmable gate arrays (FPGAs), and/or application-specific integrated circuits (ASICs), such as tensor processing units (TPUs).

The instructions 616 can include one or more instructions that when executed by the processors 612, causes the one or more processors 612 to perform actions defined by the instructions 616. The instructions 616 can be stored in object code format for direct processing by the processors 612, or in other formats including interpretable scripts or collections of independent source code modules that are interpreted on demand or compiled in advance. The instructions 616 can include instructions for implementing the data processing system 602 as described herein. The data processing system 602 can be executed using the processors 612, and/or using other processors remotely located from the server computing device 604.

The data 618 can be retrieved, stored, or modified by the processors 612 in accordance with the instructions 616. The data 618 can be stored in computer registers, in a relational or non-relational database as a table having a plurality of different fields and records, or as JSON, YAML, proto, or XML documents. The data 618 can also be formatted in a computer-readable format such as, but not limited to, binary values, ASCII or Unicode. Moreover, the data 618 can include information sufficient to identify relevant information, such as numbers, descriptive text, proprietary codes, pointers, references to data stored in other memories, including other network locations, or information that is used by a function to calculate relevant data.

The user computing device 606 can also be configured similarly to the server computing device 604, with one or more processors 620, memory 622, instructions 624, and data 626. The user computing device 606 can also include a user output 628 and a user input 630. The user input 630 can include any appropriate mechanism or technique for receiving input from a user, such as keyboard, mouse, mechanical actuators, soft actuators, touchscreens, microphones, and sensors.

The server computing device 604 can be configured to transmit data to the user computing device 606, and the user computing device 606 can be configured to display at least a portion of the received data on a display implemented as part of the user output 628. The user output 628 can also be used for displaying an interface between the user computing device 606 and the server computing device 604. The user output 628 can alternatively or additionally include one or more speakers, transducers or other audio outputs, a haptic interface or other tactile feedback that provides non-visual and non-audible information to the platform user of the user computing device 606.

Although FIG. 6 illustrates the processors 612, 620 and the memories 614, 622 as being within the computing devices 604, 606, components described herein can include multiple processors and memories that can operate in different physical locations and not within the same computing device. For example, the processors 612 can include a collection of processors that can perform concurrent and/or sequential operation.

The server computing device 604 can be configured to receive requests to process data from the user computing device 606. For example, the environment 600 can be part of a computing platform configured to provide a variety of services to users, through various user interfaces and/or APIs exposing the platform services. One or more services can be a machine learning framework or a set of tools for generating neural networks or other machine learning models according to a specified task and training data. The user computing device 606 may receive and transmit data specifying operations to be performed by the computation unit of the data processing system 602.

The computing devices 604, 606 can be capable of direct and indirect communication over the network 610. The computing devices 604, 606 can set up listening sockets that may accept an initiating connection for sending and receiving information. The network 610 itself can include various configurations and protocols including the Internet, World Wide Web, intranets, virtual private networks, wide area networks, local networks, and private networks using communication protocols proprietary to one or more companies. The network 610 can support a variety of short- and long-range connections. The short- and long-range connections may be made over different bandwidths, such as 2.402 GHz to 2.480 GHz (commonly associated with the Bluetooth^{®} standard), 2.4 GHz and 11 GHz (commonly associated with the Wi-Fi^{®} communication protocol); or with a variety of communication standards, such as the LTE^{®} standard for wireless broadband communication. The network 610, in addition or alternatively, can also support wired connections between the computing devices 604, 606, including over various types of Ethernet connection.

Although a single server computing device 604, user computing device 606, and data processing system 602 are shown in FIG. 6, it is understood that aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof. In some examples, one or more devices implement one or more data processing systems, each data processing system including one or more computation units according to aspects of the disclosure. In some examples, a single device can implement multiple computation units, each of the multiple computation units configured to communicate with at least one other computation unit for performing a distributed data processing task, e.g., in sequential or parallel processing.

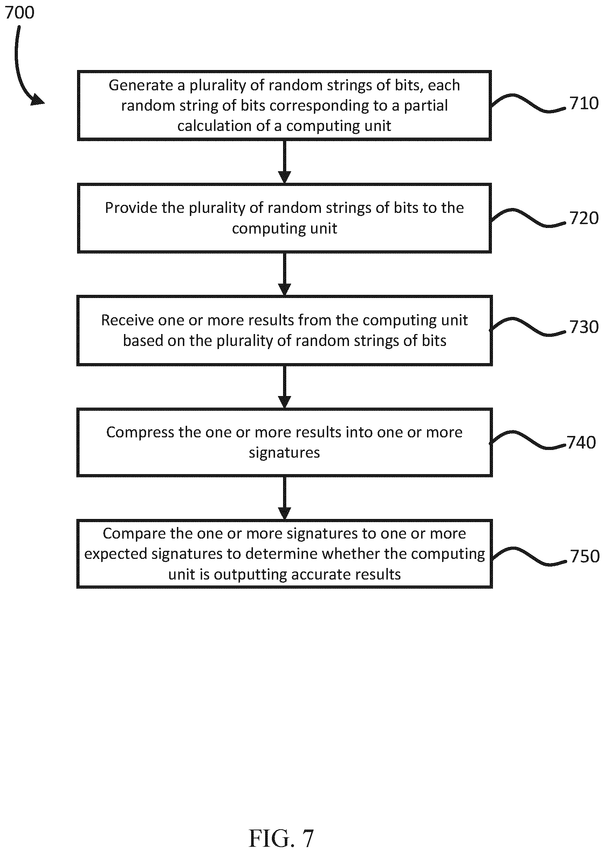

FIG. 7 depicts a flow diagram of an example process 700 for detecting defects in a computer chip. The defects can be subtle defects indicative of silent data corruption, such as voids, cracking, resistive metal shorts, or transistor voltage shifts. The example process 700 can be performed on a system of one or more processors in one or more locations, such as the BIST controller 102 as depicted in FIG. 1.

As shown in block 710, the BIST controller 102 can generate a plurality of random strings of bits. Each random string of bits can correspond to a partial calculation of a computing unit of the computer chip. For example, each random string of bits can correspond to a data column of a matrix multiplication or a vector processing unit. The BIST controller 102 can further synchronize the generation of the plurality of random strings of bits. Generating the random strings of bits can include loading an initial value and scrambling the initial value, where each initial value is scrambled differently for each random string of bits. Generating the random strings of bits can further include loading a pseudorandom binary sequence representing a random string of bits.

The BIST controller 102 can further convert the plurality of random strings of bits to a plurality of data streams based on predetermined data profiles. The predetermined data profiles can include one or more of random input values, light or heavy input values, inputs with ascending or descending values, inputs with values representing hills or valleys, or inputs toggled with low or high values. The predetermined data profiles can further include customized profiles having a programmable data range and probability.

As shown in block 720, the BIST controller 102 can provide the plurality of random strings of bits, or the plurality of data streams, to the computing unit. Providing the plurality of data streams to the computing unit can include providing a specific value every cycle, providing a random value every cycle, holding a last value for one or more cycles, and/or operating according to a pulse mode.

As shown in block 730, the BIST controller 102 can receive one or more results from the computing unit based on the plurality of random strings or bits or plurality of data streams. The computing unit can calculate the one or more results, such as matrix multiplications, from the plurality of random strings of bits or plurality of data streams.

As shown in block 740, the BIST controller 102 can compress the one or more results into one or more signatures. The one or more signatures can correspond to particular strings of bits for comparison to ground-truth values.

As shown in block 750, the BIST controller 102 can compare the one or more signatures to one or more expected signatures to determine whether the computing unit is outputting accurate results. The one or more expected signatures can represent the ground-truth values. The BIST controller 102 can implement a checksum to compare the one or more signatures to the one or more expected signatures. Comparing the one or more signatures to one or more expected signatures can further determine a health or minimum voltage of the computer chip.

The BIST controller 102 can determine the computing unit is outputting inaccurate results based on the one or more signatures not matching the one or more expected signatures. Based on determining that the computing unit is outputting inaccurate results, the BIST controller 102 can output a signal to disconnect or otherwise stop operation of the computing unit. The BIST controller 102 can further determine that the computing unit is outputting accurate results based on the one or more signatures matching the one or more expected signatures. Based on determining that the computing unit is outputting accurate results, the BIST controller 102 can output a signal validating or otherwise allowing continued operation of the computing unit.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for detecting defects in a computer chip based on accuracy of a computing unit, the method comprising:
generating, by one or more processors, a plurality of random strings of bits, each random string of bits corresponding to a data column of the computing unit;
providing, by the one or more processors, the plurality of random strings of bits to the computing unit;
receiving, by the one or more processors, one or more results from the computing unit based on the plurality of random strings of bits;
compressing, by the one or more processors, the one or more results into one or more signatures; and
comparing, by the one or more processors, the one or more signatures to one or more expected signatures to determine whether the computing unit is outputting accurate results.

2. The method of claim 1, further comprising:
determining, by the one or more processors, the computing unit is outputting inaccurate results; and
stopping, by the one or more processors, operation of the computing unit.

3. The method of one of claims 1 or 2, further comprising synchronizing, by the one or more processors, the generation of the plurality of random strings of bits.

4. The method of one of claims 1 to 3, wherein generating each of the random strings of bits further comprises loading an initial value and scrambling the initial value or loading a pseudorandom binary sequence.

5. The method of one of claims 1 to 4, further comprising:
converting, by the one or more processors, the plurality of random strings of bits to a plurality of data streams based on predetermined data profiles; and
providing, by the one or more processors, the plurality of data streams to the computing unit.

6. The method of claim 5, wherein the predetermined data profiles comprise at least one of random input values, light or heavy input values, inputs with ascending or descending values, inputs with values representing hills or valleys, or inputs toggled with low or high values; and/or
wherein the predetermined data profiles comprise customized profiles having a programmable data range and probability.

7. The method of one of claims 1 to 6, wherein providing the plurality of random strings of bits to the computing unit further comprises at least one of providing a specific value every cycle, providing a random value every cycle, holding a last value for one or more cycles, or operating according to a pulse mode.

8. The method of one of claims 1 to 7, wherein the one or more expected signatures represent one or more ground truth values; and/or
wherein comparing the one or more signatures to one or more expected signatures further determines a health or minimum voltage of the computer chip.

9. A system comprising:
one or more processors; and
one or more storage devices coupled to the one or more processors and storing instructions that, when executed by the one or more processors, cause the one or more processors to perform operations for detecting defects in a computer chip based on accuracy of a computing unit, the operations comprising:
generating a plurality of random strings of bits, each random string of bits corresponding to a data column of the computing unit;
providing the plurality of random strings of bits to the computing unit;
receiving one or more results from the computing unit based on the plurality of random strings of bits;
compressing the one or more results into one or more signatures; and
comparing the one or more signatures to one or more expected signatures to determine whether the computing unit is outputting accurate results.

10. The system of claim 9, wherein the operations further comprise:
determining the computing unit is outputting inaccurate results; and
stopping operation of the computing unit.

11. The system of one of claims 9 or 10, wherein the operations further comprise synchronizing the generation of the plurality of random strings of bits; and/or
wherein generating each of the random strings of bits further comprises loading an initial value and scrambling the initial value or loading a pseudorandom binary sequence.

12. The system of one of claims 9 to 11, wherein the operations further comprise:
converting the plurality of random strings of bits to a plurality of data streams based on predetermined data profiles; and
providing the plurality of data streams to the computing unit.

13. The system of claim 12, wherein the predetermined data profiles comprise at least one of random input values, light or heavy input values, inputs with ascending or descending values, inputs with values representing hills or valleys, or inputs toggled with low or high values; and/or
wherein the predetermined data profiles comprise customized profiles having a programmable data range and probability.

14. The system of one of claims 9 to 13, wherein providing the plurality of random strings of bits to the computing unit further comprises at least one of providing a specific value every cycle, providing a random value every cycle, holding a last value for one or more cycles, or operating according to a pulse mode; and/or
wherein the one or more expected signatures represent one or more ground truth values.

15. A non-transitory computer readable medium for storing instructions that, when executed by one or more processors, cause the one or more processors to perform operations for detecting defects in a computer chip based on accuracy of a computing unit, the operations comprising:
generating a plurality of random strings of bits, each random string of bits corresponding to a data column of the computing unit;
providing the plurality of random strings of bits to the computing unit;
receiving one or more results from the computing unit based on the plurality of random strings of bits;
compressing the one or more results into one or more signatures; and
comparing the one or more signatures to one or more expected signatures to determine whether the computing unit is outputting accurate results.
